# EUROPÄISCHE PATENTSCHRIFT

(11) **EP 0 524 563 B1**
(45) Veröffentlichungstag und Bekanntmachung des Hinweises auf die Patenterteilung: **27.12.1995**
(21) Anmeldenummer: 92112313.9
(22) Anmeldetag: 18.07.1992
(51) Int. Cl.: H04N 7/087

(54) **Verfahren und Fernsehtextempfangsgerät zur Verringerung der Wartezeiten bei der Anzeige von Fernsehtextseiten**
Teletext reception method and device for reducing the waiting time during teletext page display
Méthode et dispositif pour la réception de télétexte avec diminution des temps d'attente lors de l'affichage de pages de télétexte

(30) Priorität: 22.07.1991 DE 4124257
(43) Veröffentlichungstag der Anmeldung: 27.01.1993
(73) Patentinhaber: Grundig E.M.V. Elektro-Mechanische Versuchsanstalt Max Grundig GmbH & Co. KG, 90762 Fürth (DE)
(72) Erfinder: Hegendörfer, Max, GRUNDIG E.M.V., Max Grundig, W-8510 Fürth (DE)

(56) Entgegenhaltungen:
- EP-A- 0 304 129
- GB-A- 2 107 159
- RUNDFUNKTECHNISCHE MITTEILUNGEN Bd. 31, Nr. 2, März 1987, NORDERSTEDT, DEUTSCHLAND Seiten 83 - 93 G. EITZ, K.-U. OBERLIES, H. KOCH 'Top- Ein Verfahren zur vereinfachten Anwahl von Fernsehtext-Tafeln durch den Zuschauer'

## Beschreibung

Die Erfindung betrifft ein Verfahren zur Verringerung der Wartezeiten bei der Anzeige von Fernsehtextseiten und ferner ein Fernsehtextempfangsgerät mit den im Oberbegriff des Anspruchs 4 angegebenen Merkmalen.

Aus der DE-C2 30 12 429 ist bereits ein Verfahren zur Verringerung der Wartezeiten bei der Anzeige von Text- und Grafikseiten bekannt. Bei diesem bekannten Verfahren werden senderseitig zu wenigstens einem Teil der zu übertragenden Text- oder Grafikseiten nicht beim Empfänger dargestellte Zusatzinformationen mit Hinweisen auf weitere inhaltlich zugeordnete Seiten hinzugefügt. Empfangsseitig wird jeweils eine ausgewählte Seite auf einem Sichtgerät dargestellt und ferner diejenigen Seiten automatisch gespeichert, die in der Zusatzinformation der ausgewählten Seite bezeichnet sind. Diese automatisch gespeicherten Seiten können bei Bedarf verzögerungsfrei auf dem Sichtgerät angezeigt werden.

Der Nachteil dieses bekannten Verfahrens besteht darin, daß für die Übertragung der Zusatzinformationen, bei denen es sich um die Seitennummern inhaltlich zugeordneter Seiten handelt, vergleichweise viel Übertragungskapazität zur Verfügung gestellt werden muß. Dies ist insbesondere dann der Fall, wenn einer Seite eine größere Anzahl von inhaltlich zugehörigen Seiten zugeordnet werden soll. Ein weiterer Nachteil des bekannten Verfahrens besteht darin, daß das senderseitige Erstellen der Zusatzinformationen aufwendig und fehleranfällig ist. In diesem Zusammenhang ist auch von Bedeutung, daß sich die Anzahl der übertragenen Seiten zu einzelnen Themen und damit auch die senderseitig zu erstellenden Zusatzinformationen von Tag zu Tag erheblich ändern kann.

Der Erfindung liegt die Aufgabe zugrunde, ein Verfahren anzugeben, bei dem die vorstehend beschriebenen Nachteile verringert sind.

Diese Aufgabe wird durch ein Verfahren mit den im Anspruch 1 angegebenen Merkmalen gelöst. Vorteilhafte Ausgestaltungen des beanspruchten Verfahrens sind Gegenstand der abhängigen Ansprüche 2 und 3. Der Anspruch 4 betrifft ein Fernsehtextempfangsgerät, wie es zur Realisierung des beanspruchten Verfahrens verwendet werden kann. Eine vorteilhafte Weiterbildung dieses Fernsehtextempfangsgerätes ist Gegenstand des Anspruchs 5.

Die Vorteile der Erfindung bestehen insbesondere darin, daß auch ohne Übertragung von Zusatzinformationen empfängerseitig jeder einzelnen numerierten Fernsehtextseite weitere Seiten gleichen Themas zugeordnet werden können, da sie in demselben Seitennummernintervall übertragen werden.

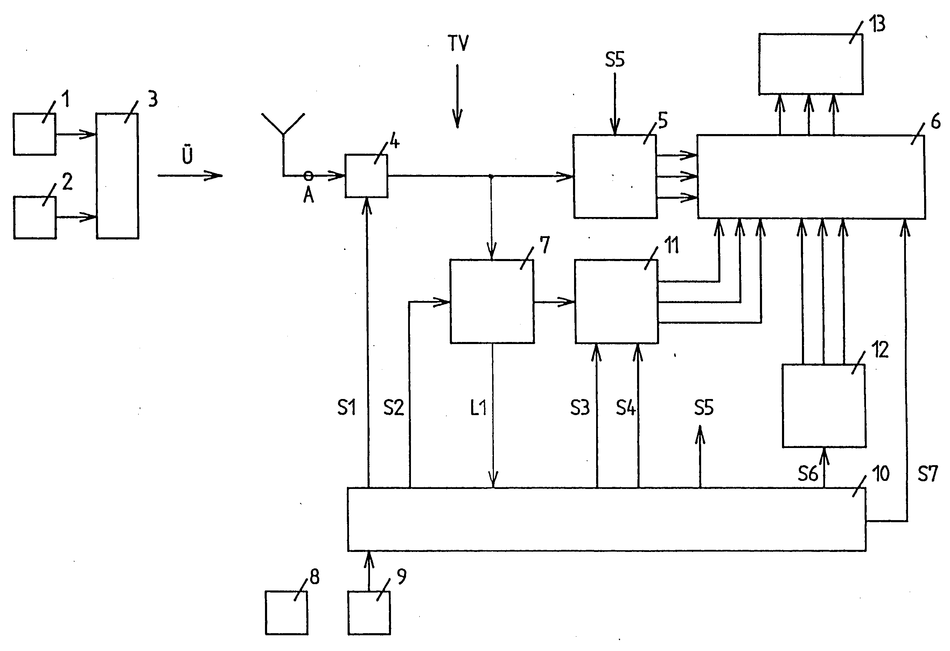

Im folgenden wird ein Ausführungsbeispiel für die Erfindung anhand der Figur näher erläutert.

Diese zeigt einen Sender, bestehend aus einer Videosignalquelle 1, einer Vorrichtung 2 zur Erzeugung von Signalen, die einzelnen Fernsehtextseiten entsprechen, und einer Einsetzschaltung 3, in welcher die Fernsehtextsignale in die vertikalen Austastlücken des Videosignals eingesetzt werden. In der Vorrichtung 2 wird in jede Fernsehtextseite eine Seitennummer eingesetzt.

Diese Seitennummer richtet sich danach, welchem Themenkreis die jeweilige Fernsehtextseite angehört. Jedem Themenkreis sind ein oder mehrere Seitennummernintervalle fest zugeordnet. Beispielsweise sind dem Themenkreis Nachrichten die Seitennummernintervalle 100-124 und 125-149 zugeordnet, dem Themenkreis Sport die Seitennummernintervalle 200-224 und 225-249, dem Themenkreis Programmvorschau das Seitennummernintervall 300-324, dem Themenkreis Unterhaltung das Seitennummernintervall 325-349, usw.. Jedes der Seitennummernintervalle umfaßt eine fest vorgegebene Anzahl von Seiten, welche - wie vorstehend aufgezeigt - für alle Seitennummernintervalle gleich ist.

Das über eine Übertragungsstrecke Ü übertragene Signal wird einem Fernsehempfänger TV über dessen Antenneneingang A zugeführt. Der gezeigte Fernsehempfänger TV weist weiterhin auf: ein aus einem Tuner und einem ZF-Verstärker bestehendes Empfangsteil 4, eine Signalverarbeitungsschaltung 5, eine Eintastschaltung 6, einen Fernsehtextdecoder 7, eine aus einem Fernbedienungsgeber 8 und einem Fernbedienempfänger 9 bestehende Bedieneinheit, einen Mikrocomputer 10, einen Fernsehtextmehrseitenspeicher 11, einen DOS-Baustein 12 (display on screen) und einen Bildschirm 13.

Der Mikrocomputer 10 dient zur Steuerung der Arbeitsweise der vorgenannten Schaltungen 4, 5, 6, 7, 11 und 12, was durch die Steuerleitungen S1, S2, S3, ..., S7 angedeutet ist.

Das empfangene hochfrequente Videosignal wird dem über die Steuerleitung S1 gesteuerten Empfangsteil zugeführt, an dessen Ausgang ein FBAS-Signal zur Verfügung steht. Dieses wird in der über die Steuerleitung S5 gesteuerten Signalverarbeitungsschaltung 5 in ein Komponentensignal, beispielsweise ein R, G, B-Signal umgewandelt. Das am Ausgang der Signalverarbeitungsschaltung 5 erhaltene R, G, B-Signal wird der Eintastschaltung 6 zugeführt.

Ferner werden aus dem am Ausgang des Empfangsteils 4 zur Verfügung stehenden FBAS-Signal im Fernsehtextdecoder 7 die in den vertikalen Austastlücken übertragenen Fernsehtextsignale, die einer mittels der Bedieneinheit 8, 9 ausgewählten Fernsehtextseite entsprechen, abgetrennt und decodiert. Die Abtrennung und Decodierung wird vom Steuersignal S2 gesteuert, welches dem Fernsehtextdecoder 7 vom Mikrocomputer 10 in Ansprache auf die genannte Seitenauswahl zugeführt wird.

Die der ausgewählten Fernsehtextseite entsprechenden Signale werden im Fernsehtextmehrseitenspeicher 11 abgespeichert. Zu dieser Abspeicherung werden dem Fernsehtextmehrseitenspeicher 11 über die Steuerleitung S3 im Mikrocomputer 10 erzeugte Schreibtaktsignale zugeführt. Ferner wird das in der ausgewählten Fernsehtextseite enthaltene Seitennummernsignal im Fernsehtextdecoder 7 aus dem Fernsehtextsignal abgeleitet und über die Leitung L1 dem Mikrocomputer 10 zugeführt.

Zum Auslesen der Signale aus dem Fernsehtextmehrseitenspeicher 11 erzeugt der Mikrocomputer 10 Lesetaktsignale, die dem Fernsehtextmehrseitenspeicher 11 über die Steuerleitung S4 zugeführt werden. Die aus dem Fernsehtextmehrseitenspeicher 11 ausgelesenen Signale werden der Eintastschaltung 6 in Form von R, G, B-Signalen zugeführt.

Durch geeignete Steuerung des Eintastvorganges durch den Mikrocomputer 10 über die Steuerleitung S7 können die Fernsehtextsignale entweder dem normalen Fernsehbild oder Signalen, die im über die Steuerleitung S6 gesteuerten DOS-Baustein erzeugt werden, überlagert werden.

Die Ausgangssignale der Eintastschaltung 6 werden auf dem Bildschirm 13 des Fernsehempfängers TV dargestellt.

Wird nun seitens des Benutzers nach der Auswahl einer Fernsehtextseite bzw. während der Darstellung der ausgewählten Fernsehtextseite auf dem Bildschirm 13 eine Speicherauslösetaste auf dem Fernbedienungsgeber 8 betätigt, dann erkennt der Mikrocomputer 10, daß die Abspeicherung weiterer Fernsehtextseiten gleichen Themas gewünscht ist, die demselben Seitennummernintervall angehören wie die momentan ausgewählte bzw. momentan auf dem Bildschirm 13 dargestellte Fernsehtextseite.

Da der Mikrocmputer 10 über die Leitung L1 das in der ausgewählten Fernsehtextseite enthaltene Seitennummernsignal erhalten hat, kann er die Seitennummern aller im Fernsehtextzyklus des momentan eingestellten Senders übertragenen Fernsehtextseiten daraufhin überprüfen, ob sie in demselben Seitennummernintervall liegen, in welchem auch die Seitennummer der bereits ausgewählten bzw. auf dem Bildschirm 13 dargestellten Fernsehtextseite liegt. Ist das der Fall, dann intitiiert der Mikrocomputer 10 über die Steuerleitung S3 die Abspeicherung der jeweiligen Fernsehtextseite im Fernsehtextmehrseitenspeicher 11.

Nach Beendigung eines Fernsehtextzyklusses sind alle Fernsehtextseiten, die demselben Seitennummernintervall angehören wie die ausgewählte Fernsehtextseite, im Fernsehtextmehrseitenspeicher 11 abgelegt und können verzögerungsfrei aus diesem abgerufen und auf dem Bildschirm 13 dargestellt werden.

Beispielsweise kann der Benutzer mittels der Zifferntastatur des Fernbedienungsgebers 8 eine Nachrichtenseite anwählen. Nach dieser Anwahl kann durch Betätigung der Speicherauslösetaste des Fernbedienungsgebers die Abspeicherung aller Nachrichtenseiten bewirkt werden, die vom momentan eingestellten Sender in demselben Seitennummernintervall wie die angewählte Nachrichtenseite übertragen werden.

Bei einer zweiten Ausführungsform der Erfindung erfolgt die Abspeicherung aller weiteren Fernsehtextseiten, die demselben Seitennummernintervall angehören wie eine ausgewählte Fernsehtextseite, nach der Auswahl der Fernsehtextseite automatisch, d.h. ohne daß es der Betätigung einer Speicherauslösetaste bedarf.

Die Erfindung ist auch dann verwendbar, wenn die Speicherkapazität des Fernsehtextmehrseitenspeichers 11 nicht zur Abspeicherung aller Fernsehtextseiten, die demselben Seitennummernintervall angehören wie eine ausgewählte Fernsehtextseite, ausreicht. In diesem Fall können beispielsweise die ausgewählte Seite und die 7 Seiten des gewünschten Seitennummernintervalls mit den nächstgrößeren Seitennummern oder die 7 Seiten des gewünschten Seitennummernintervalls, die im Fernsehtextzyklus als nächstes übertragen werden, im Fernsehtextmehrseitenspeicher 11 abgelegt werden.

Ferner ist die Erfindung auch dann einsetzbar, wenn nicht - wie gezeigt - ein Fernsehempfänger, sondern ein Videorecorder als Fernsehtextempfangsgerät verwendet wird.

## Patentansprüche

1. Verfahren zur Verringerung der Wartezeiten bei der Anzeige von Fernsehtextseiten mit folgenden Verfahrensschritten:
- Senderseitiges Erzeugen von Signalen, die einzelnen Fernsehtextseiten entsprechen,
- Zuordnen jeder Fernsehtextseite zu einem Themenkreis und Einfügen einer Seitennummer in jede Fernsehtextseite, wobei die Seitennummer aus einem dem Themenkreis fest zugeordneten Seitennummernintervall gewählt wird und wobei alle Seitennummernintervalle die gleiche Anzahl von Seiten umfassen,
- Übertragen der Fernsehtextseiten auf die Empfangsseite,
- empfangsseitiges manuelles Auswählen einer der numerierten Fernsehtextseiten,
- mikrocomputergesteuertes Abspeichern weiterer Fernsehtextseiten, die demselben Seitennummernintervall angehören wie die manuell ausgewählte Fernsehtextseite.

2. Verfahren nach Anspruch 1,
**dadurch gekennzeichnet,** daß das mikrocomputergesteuerte Abspeichern weiterer Fernsehtextseiten nach dem manuellen Auswählen einer der numerierten Fernsehtextseiten automatisch erfolgt.

3. Verfahren nach Anspruch 1,
**dadurch gekennzeichnet,** daß das mikrocomputergesteuerte Abspeichern weiterer Fernsehtextseiten nach dem manuellen Auswählen einer der numerierten Fernsehtextseiten manuell ausgelöst wird.

4. Fernsehtextempfangsgerät zur Verwendung in einem Verfahren gemäß Anspruch 1 mit
- einer Bedieneinheit zur Auswahl einer numerierten Fernsehtextseite,
- einem Fernsehtextdecoder zur Decodierung der der ausgewählten Fernsehtextseite entsprechenden Fernsehtextsignale, und
- einem Mehrseitenspeicher zur Abspeicherung der Fernsehtextsignale mehrerer Fernsehtextseiten,
**dadurch gekennzeichnet,** daß es einen Mikrocomputer aufweist, der die Abspeicherung der Fernsehtextsignale weiterer Fernsehtextseiten, die demselben Seitennummernintervall wie die ausgewählte Fernsehtextseite angehören, steuert.

5. Fernsehtextempfangsgerät nach Anspruch 4,
**dadurch gekennzeichnet,** daß die Bedieneinheit eine Taste aufweist, durch deren Betätigung die Abspeicherung der weiteren Fernsehtextseiten ausgelöst wird.

## Claims

1. Method of reducing the waiting time in displaying teletext pages, comprising the following method steps:
- generation at the transmitting end of signals which correspond to individual teletext pages,
- allocation of each teletext page to a topic and insertion of a page number into each teletext page, the page number being chosen from a page number range permanently allocated to the topic and all the page number ranges comprising the same number of pages,
- transmission of the teletext pages to the receiving end,
- manual selection at the receiving end of the numbered teletext pages,
- microcomputer-controlled storage of further teletext pages which belong to the same page number range as the manually selected teletext page.

2. Method according to Claim 1, characterized in that the microcomputer-controlled storage of further teletext pages after the manual selection of one of the numbered teletext pages takes place automatically.

3. Method according to Claim 1, characterized in that the microcomputer-controlled storage of further teletext pages after the manual selection of one of the numbered teletext pages is initiated manually.

4. Teletext receiver for use in a method according to Claim 1, comprising
- a control unit for selecting a numbered teletext page,
- a teletext decoder for decoding the teletext signals corresponding to the selected teletext page, and
- a multipage memory for storing the teletext signals of a plurality of teletext pages,
characterized in that it has a microcomputer which controls the storage of the teletext signals of further teletext pages which belong to the same page number range as the selected teletext page.

5. Teletext receiver according to Claim 4, characterized in that the control unit has a key whose actuation initiates the storage of the further teletext pages.

## Revendications

1. Procédé pour diminuer les temps d'attente lors de l'affichage de pages de télétexte avec les phases de procédé suivantes :
- générer côté émetteur des signaux qui correspondent à des pages de télétexte particulières,
- joindre chaque page de télétexte à un domaine de sujet et insérer un numéro de page dans chaque page de télétexte, le numéro de page étant choisi à partir d'une gamme de numéros de pages qui est invariablement adjointe au domaine du sujet et toutes les gammes de numéros de pages comprenant le même nombre de pages,
- transmettre les pages de télétexte au côté récepteur,
- sélectionner manuellement du côté récepteur une des pages de télétexte numérotées,
- mémoriser sous la commande d'un micro-ordinateur d'autres pages de télétexte qui appartiennent à la même gamme de numéros de pages que la page de télétexte sélectionnée manuellement.

2. Procédé selon la revendication 1, caractérisé en ce que la mémorisation sous la commande d'un micro-ordinateur d'autres pages de télétexte s'effectue automatiquement après la sélection manuelle d'une des pages de télétexte numérotées.

3. Procédé selon la revendication 1, caractérisé en ce que la mémorisation sous la commande d'un micro-ordinateur d'autres pages de télétexte qui suit à la sélection manuelle d'une des pages de télétexte numérotées est lancée manuellement.

4. Poste récepteur de pages de télétexte qui peut être utilisé avec un procédé selon la revendication 1, avec :
- une unité de manoeuvre pour sélectionner une page de télétexte numérotée,
- un décodeur de télétexte pour le décodage des signaux de télétexte qui correspondent à la page de télétexte sélectionnée, et
- une mémoire à plusieurs pages pour mémoriser les signaux de télétexte de plusieurs pages de télétexte, caractérisé en ce qu'il comprend un micro-ordinateur qui commande la mémorisation des signaux de télétexte des autres pages de télétexte qui appartiennent à la même gamme de numéros de pages que la page de télétexte sélectionnée.

5. Poste récepteur de télétexte selon la revendication 4, caractérisé en ce que l'unité de manoeuvre comprend une touche par l'actionnement de laquelle la mémorisation des autres pages de télétexte est déclenchée.
